# EUROPEAN PATENT APPLICATION

(11) **EP 3 865 819 A1**
(43) Date of publication of application: **18.08.2021**
(21) Application number: 20156635.3
(22) Date of filing: 11.02.2020
(51) Int. Cl.: G01C 21/20, G08G 3/00, G01C 21/00

(54) **VIRTUAL CORRIDOR FOR VEHICLE NAVIGATION**

(71) Applicant: VTT SenseWay Oy, 20520 Turku (FI)
(72) Inventor: Järvinen, Jarkko, 20520 Turku (FI); Kettunen, Kalle, 20520 Turku (FI); Karsten, Jan, 20520 Turku (FI); Saarela, Jaakko, 20520 Turku (FI); Vaajala, Kristian, 20520 Turku (FI); Backman, Vilhelm, 20520 Turku (FI); Pohjankukka, Jonne, 20520 Turku (FI); Pitkänen, Pasi, 20520 Turku (FI); Kummala, Eetu, 20520 Turku (FI); Peippo, Anu, 20520 Turku (FI); Laaksonen, Jere, 20520 Turku (FI); Uggeldahl, Jari, 20520 Turku (FI); Moisala, Jukka, 20520 Turku (FI)
(74) Representative: Papula Oy

(57) **Abstract**

Various example embodiments generally relate to navigation systems for vehicles. A server may receive situational data comprising locations a plurality of registered vehicles. Based on the situational data the server may determine situational awareness data comprising at least an estimate of future locations of the plurality of registered vehicles. Based on the situational awareness data the server may determine a virtual corridor for at least one registered vehicle. The virtual corridor may comprise borders of an allowed navigation route and at least one location within the allowed navigation route associated with at least one navigation parameter. The server may transmit an indication of the virtual corridor to a client, which may cause display of the virtual corridor or provide the virtual corridor data to a navigation system of an autonomous vehicle. Apparatuses, methods, and computer programs are disclosed.

## Description

### TECHNICAL FIELD

Various example embodiments generally relate to the field of navigation systems for vehicles. In particular, some example embodiments relate to providing navigation instructions to a plurality of non-autonomous, semi-autonomous, or autonomous vehicles.

### BACKGROUND

Maritime navigation systems are typically based on decisions made locally at each vessel based on information locally acquired at each vessel, information received from other vessels, or information received over a network connection. For example, each vessel may be configured with an automatic identification system (AIS) transceiver to broadcast location information of the vessel and to receive location information of other vessels. Based on the received data the navigation system of the vessel may visualize the situation at the vicinity of the vessel, for example to enable the captain of the vessel to safely navigate the vessel to the destination. Alternatively, the received information may be provided to an autonomous navigating system, which may handle navigation of the vessel without human input.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments provide apparatuses and methods to ensure safe and efficient flow of traffic by creating virtual corridors and managing traffic to and within the virtual corridors. These benefits may be achieved by the features of the independent claims. Further implementation forms are provided in the dependent claims, the description, and the drawings.

According to an aspect, an apparatus comprises means for receiving situational data from a plurality of data sources, the situational data comprising location data of a plurality of registered vehicles; means for determining situational awareness data based on the situational data, wherein the situational awareness data comprises an estimate of future locations of the plurality of registered vehicles; means for determining a virtual corridor for at least one registered vehicle based on the situational awareness data, wherein the virtual corridor comprises: borders of an allowed navigation route, and at least one location within the allowed navigation route associated with at least one navigation parameter; and means for transmitting an indication of the virtual corridor to the registered vehicle.

According to an aspect, a method comprises receiving situational data from a plurality of data sources, the situational data comprising location data of a plurality of registered vehicles; determining situational awareness data based on the situational data, wherein the situational awareness data comprises an estimate of future locations of the plurality of registered vehicles; determining a virtual corridor for at least one registered vehicle based on the situational awareness data, wherein the virtual corridor comprises: borders of an allowed navigation route, and at least one location within the allowed navigation route associated with at least one navigation parameter; and transmitting an indication of the virtual corridor to the registered vehicle.

According to an aspect, a computer program is configured, when executed by an apparatus, to cause the apparatus at least to: receive situational data from a plurality of data sources, the situational data comprising location data of a plurality of registered vehicles; determining situational awareness data based on the situational data, wherein the situational awareness data comprises an estimate of future locations of the plurality of registered vehicles; determine a virtual corridor for at least one registered vehicle based on the situational awareness data, wherein the virtual corridor comprises: borders of an allowed navigation route, and at least one location within the allowed navigation route associated with at least one navigation parameter; and transmit an indication of the virtual corridor to the registered vehicle.

According to an aspect, an apparatus comprises means for receiving an indication of a virtual corridor, wherein the virtual corridor comprises: borders of an allowed navigation route, and at least one location within the allowed navigation route associated with at least one navigation parameter.

According to an aspect, a method comprises receiving an indication of a virtual corridor, wherein the virtual corridor comprises: borders of an allowed navigation route, and at least one location within the allowed navigation route associated with at least one navigation parameter.

According to an aspect, a computer program is configured, when executed by an apparatus, to cause the apparatus at least to: receive an indication of a virtual corridor, wherein the virtual corridor comprises: borders of an allowed navigation route, and at least one location within the allowed navigation route associated with at least one navigation parameter.

Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to understand the example embodiments. In the drawings:
FIG. 1 illustrates an example of a system for determining and managing virtual corridors for at least one registered vehicle, according to an example embodiment;
FIG. 2 illustrates an example embodiment of an apparatus 200 configured to practice one or more example embodiments;
FIG. 3 illustrates an example of a sequence diagram for determining and managing virtual corridors, according to an example embodiment;
FIG. 4 illustrates an example of an application for displaying virtual corridors, according to an example embodiment;
FIG. 5 illustrates an example of a method for determining a virtual corridor at a server, according to an example embodiment; and
FIG. 6 illustrates an example of receiving a virtual corridor at a client, according to an example embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

To enable safe and efficient traffic management for autonomous and traditional vehicles, the traffic management may be centralized in order to simultaneously optimize navigation of a plurality of vehicles. Furthermore, it may be desired to monitor the traffic to predict and prevent any hazardous events caused by other vehicles or other objects. Situational awareness of a plurality of vehicles and objects may be utilized to guide the vehicles to their destinations with a smooth overall traffic flow. Furthermore, situational awareness enables to prevent collisions and other abnormalities on their routes.

A server may be configured determine and manage one or more virtual corridors for registered vehicles. The server may be further configured to generate and transmit notifications associated with the virtual corridors to the registered vehicles. The server may be further configured to monitor real-time data such that safety may be ensured for all registered vehicles. Example embodiments may be applied in traffic control systems for any type of vehicles including vehicles with or without automatic steering control systems. Example embodiments may be applied for example in maritime traffic control, ground traffic control, air traffic control, space traffic control, or the like. Examples of vehicles include, but are not limited to, traditional vessels without steering control automation, smart vessels, cars, aircrafts, space shuttles, or the like.

According to an example embodiment, the server may receive situational data comprising locations a plurality of registered vehicles. Based on the situational data the server may determine situational awareness data comprising at least an estimate of future locations of the plurality of registered vehicles. Based on the situational awareness data the server may determine a virtual corridor for at least one registered vehicle. The virtual corridor may comprise borders of an allowed navigation route and at least one location within the allowed navigation route associated with at least one navigation parameter. The server may transmit an indication of the virtual corridor to a client, which may cause display of the virtual corridor or provide the virtual corridor data to a navigation system of an autonomous vehicle.

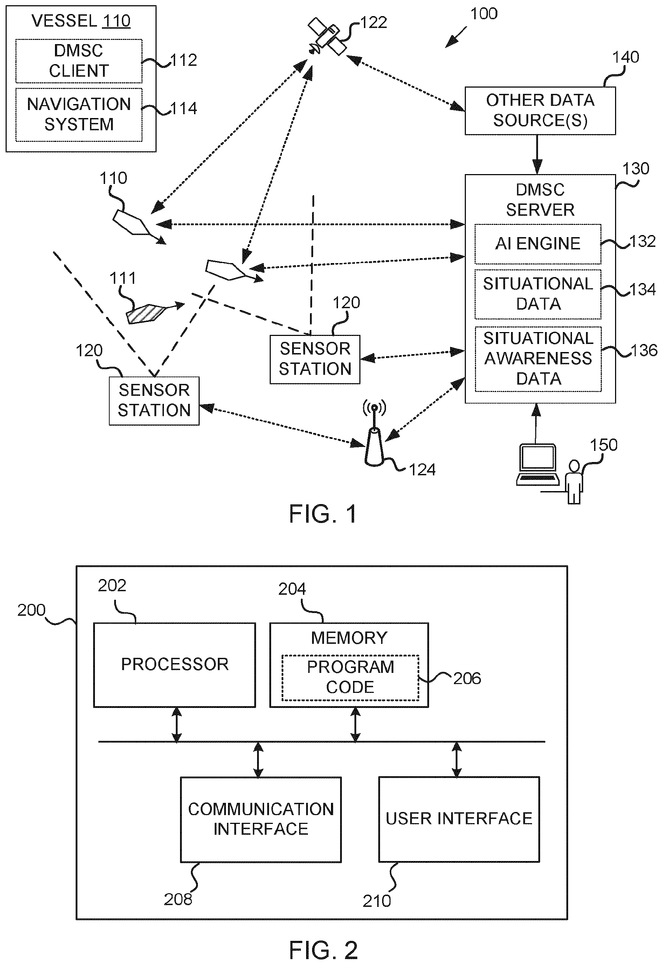

FIG. 1 illustrates an example of a system for determining and managing virtual corridors for at least one registered vehicle, according to an example embodiment. The system may be associated with providing a digital maritime surface corridor (DMSC) for a vessel, but it is appreciated that example embodiments may be also applied for providing virtual corridors for other type of navigation systems, for example a ground traffic navigation system involving a plurality of connected cars, air traffic navigation systems, space traffic navigation systems, or the like. The system 100 may comprise a plurality of registered vehicles, which may for example include a registered vessel 110. In general, the system may comprise a plurality of registered vessels. The registered vessel 110 may comprise a DMSC client 112 and a navigation system 114. The DMSC client 112 and the navigation system 114 may be provided as separate devices or software modules at registered vessel 110. According to an example embodiment, the DMSC client 112 may be configured to communicate with a DMSC server 130 and to provide information received from the DMSC server 130 to the navigation system 114 of the registered vessel 110. However, in other embodiments the DMSC client 112 may not be coupled to the navigation system 114. It is also possible that registered vessel 110 does not comprise a separate navigation system 114. In this case, functionality described herein may be implemented at the DMSC client 112, which may be for example embodied as an application on a mobile phone or a tablet computer.

The DMSC server 130 may comprise one or more communication interfaces for receiving data from a plurality of data sources. The data sources may comprise the registered vessel 110, the plurality of registered vessels, one or more unregistered vessels 111, or more sensor stations 120, or other data sources 140. The DMSC server 130 may receive information over a radio link from the registered vessels, for example over a VHF (very high frequency) channel. The information may be transmitted by the registered or unregistered vessel(s) for example based on the automatic identification system (AIS). The one or more sensor stations 120 may comprise any suitable type of sensors for acquiring information about vessels or objects within the range of the sensor stations 120. For example, the sensor stations may comprise camera(s), microphone(s), onshore or offshore radar(s), lidar(s), or the like. The camera(s) may comprise visible light camera(s), infrared camera(s), or in general wide-spectrum camera(s) capable of capturing electromagnetic radiation beyond the wavelength range of visible light. The sensor stations 120 may be provided at fixed locations at a sufficient distance from expected routes of the registered vessels. Sensor stations 120 may be also mobile, for example any of the different type of sensors may be provided on a drone. The sensor stations 120 may provide data to the DMSC server 130 over any suitable communication interface, for example a wired interface, a wireless local area network connection such as for example Wi-Fi, or over an internet connection provided for example by a cellular radio access network (RAN) node 124, which may provide cellular data services for example in accordance with the 4G LTE standard specified by the 3^{rd} Generation Partnership Project (3GPP). The DMSC server 130 may be implemented as a cloud service.

The system 100 may further comprise at least one satellite 122, which may be for example configured to receive AIS data from the registered and unregistered vessels 110, 111 and provide the AIS data to an AIS server. The satellite 122 may also operate as one sensor station. For example, images captured by satellite may be provided to the DMSC server 130.

The system may further comprise other data sources 140. For example, an AIS server may operate as another data source by providing AIS information of the registered and unregistered vessels 110, 111 to the DMSC server 130. Other data sources 140 may also include weather services or external sources of traffic data, such as for example a vessel traffic service (VTS).

Data associated with current location or other parameters or circumstances of the registered or unregistered vessels 110, 111, may be gathered at the DMSC server 130, for example as situational data 134. In general, situational data 134 may comprise current or historical information on a plurality of vessels. For example, situational data 134 may be received from the plurality of data sources in real-time, or close to real-time, and the DMSC server 130 may be configured to gather historical data based on the real-time data.

The server 130 may further comprise an artificial intelligence (AI) engine 132. The AI engine 132 may be trained to detect objects or abnormalities, predict routes of the registered and/or unregistered vessels, or objects based on the situational data 134. The AI engine 132 may use the situational data 134 to predict future locations of the registered and unregistered vessels or other objects. The AI engine 132 may be implemented for example as a neural network, which may take as input the situational data 134 and provide as output situational awareness data 136, which may for example include estimates of future locations of the registered and/or unregistered vessels, or other objects. The AI engine 132 may be trained for example based on comparing the output of the AI engine generated based previous situational data and adjusting parameters of the AI engine accordingly to minimize a difference between the predicted and realized situational data.

It is however noted that the situational awareness data 136 may be also determined algorithmically, without exploiting the AI engine 132. For example, future locations of vessels may be estimated based on current navigation parameters such as for example current speed and direction, or historical data, for example previous destinations of a particular vessel or average durations for particular navigation routes.

In general, situational awareness data may comprise information derived based on the situational data 134. The situational awareness data may relate to any type of information that affects navigation of the registered vessels 110. The situational awareness data 136 may be used by the DMSC server 130 to determine navigation instructions for example as virtual corridors for registered vessels, as will be further described below.

The DMSC server 130 may be autonomous or it 130 may be operated or supervised by a user 150. For example, user 150 may be enabled to monitor and/or modify the virtual corridors determined by the DMSC server 130. For example, a user may be requested to accept virtual corridor(s) determined by DMSC server 130 before transmission of the virtual corridors to the registered vessels.

FIG. 2 illustrates an example embodiment of an apparatus 200 configured to practice one or more example embodiments. The apparatus 200 may comprise for example a computing device such as for example a server device, a client device, a mobile phone, a tablet computer, a laptop, a sensor station or the like. In one example, apparatus 200 may comprise a vehicle such as for example a vessel. Although apparatus 200 is illustrated as a single device it is appreciated that, wherever applicable, functions of apparatus 200 may be distributed to a plurality of devices.

The apparatus 200 may comprise at least one processor 202. The at least one processor may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus may further comprise at least one memory 204. The memory may be configured to store, for example, computer program code or the like, for example operating system software and application software. The memory may comprise one or more volatile memory devices, one or more non-volatile memory devices, and/or a combination thereof. For example, the memory may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

Apparatus 200 may further comprise communication interface 208 configured to enable the apparatus 200 to transmit and/or receive information, to/from other apparatuses. The communication interface 208 may be configured to provide at least one wireless radio connection, such as for example a 3GPP mobile broadband connection (e.g. 3G, 4G, 5G). However, the communication interface may be configured to provide one or more other type of connections, for example a wireless local area network (WLAN) connection such as for example standardized by IEEE 802.11 series or Wi-Fi alliance; a short range wireless network connection such as for example a Bluetooth, NFC (near-field communication), or RFID connection; a wired connection such as for example a local area network (LAN) connection, a universal serial bus (USB) connection or an optical network connection, or the like; or a wired Internet connection. Communication interface 208 may comprise, or be configured to be coupled to, at least one antenna to transmit and/or receive radio frequency signals. One or more of the various types of connections may be also implemented as separate communication interfaces, which may be coupled or configured to be coupled to a plurality of antennas.

The apparatus 200 may further comprise a user interface 210 comprising an input device and/or an output device. The input device may take various forms such a keyboard, a touch screen, or one or more embedded control buttons. The output device may for example comprise a display, a speaker, a vibration motor, or the like.

When the apparatus 200 is configured to implement some functionality, some component and/or components of the apparatus, such as for example the at least one processor and/or the memory, may be configured to implement this functionality. Furthermore, when the at least one processor is configured to implement some functionality, this functionality may be implemented using program code 206 comprised, for example, in the memory 204.

The functionality described herein may be performed, at least in part, by one or more computer program product components such as software components. According to an embodiment, the apparatus comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus comprises means for performing at least one method described herein. In one example, the means comprises the at least one processor, the at least one memory including program code configured to, when executed by the at least one processor, cause the apparatus to perform the method.

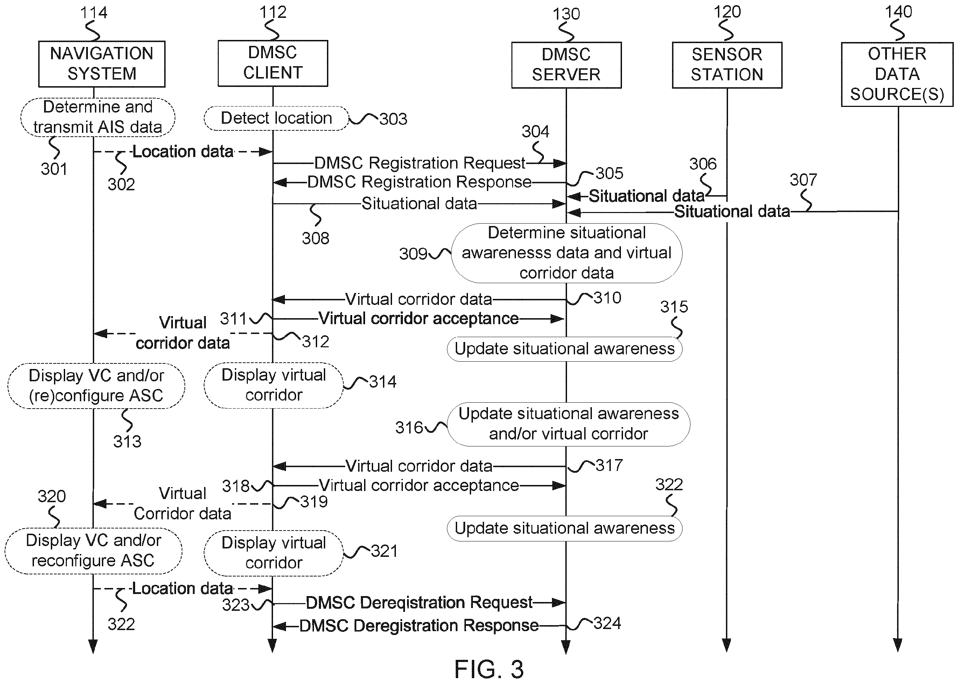

FIG. 3 illustrates an example of a sequence diagram for determining and managing virtual corridors, according to an example embodiment. As discussed with reference to FIG. 1, the navigation system 114 and DMSC client 112 may be integrated in a vessel. Alternatively, DMSC client 112 may operate as a stand-alone application, for example in a mobile phone. Both example embodiments will be described with reference to FIG. 3.

At 301, the navigation system 114 may determine and transmit at least location data of the vessel, for example according to the AIS system. The AIS data may comprise the maritime mobile service identity (MMSI) of the vessel, a navigation status (e.g. at anchor, cruising with/without engine etc.), speed and/or course over ground, heading, vessel type, vessel dimensions, draught, or the like. Location of the vessel may be determined by any suitable means, for example based on a positioning system such as GPS, GNSS, or the like.

At 302, the navigation system 114 may send the location data to the DMSC client 112. The DMSC client 112 may receive the location data from the navigation system 114, or alternatively it may detect the location at 303. For example, if the DMSC client 112 is embodied as an application downloadable to a mobile phone, the DMSC client 112 may be configured to request the location from a positioning system embedded in the mobile phone. However, any suitable means for determining location of the vessel, or a device associated therewith, may be used.

At 304, the DMSC client 112 may transmit a DMSC registration request to the DMSC server 130. The DMSC registration request may comprise information identifying the DMSC client 112 and/or the vessel, which may at this point have an unregistered status. Furthermore, optionally the DMSC registration request may comprise a current location of the vessel, current velocity of the vessel, or at least one parameter of the vessel.

At 305, the DMSC server 130 may register the DMSC client 112 and/or the vessel as a registered vessel 110 to the DMSC system, for example in response to receiving the DMSC registration request. In general, the DMSC server 130 may receive a registration request from at least one unregistered vehicle and register the at least one unregistered vehicle in response to receiving the registration request. At 306, the DMSC server 130 may transmit a DMSC registration response to confirm the registration. Subsequent to the registration, the vessel may be regarded as a registered vessel 110. In response to receiving the registration response, the DMSC client 112 may change its status to 'registered'.

At operations 306 to 308, the DMSC server 130 may receive situational data 134 from a plurality of data sources. The situational data 134 may comprise at least location data of a plurality of registered vessels. The situational data 134 may be received for example from one or more sensor stations 120 (operation 306), from other data sources 140 (operation 307), and/or from the registered vessel(s) (operation 308). Additionally, situational data 134 may be received from at least one unregistered vessel 111. The plurality of data sources may in general comprise at least two of: an automatic identification system radio receiver, an automatic identification system server, one or more remote sensor stations, one or a plurality of registered vehicles, one or a plurality of registered vehicles, or a vessel traffic system.

According to an example embodiment, the situational data 134 may comprise at least one of: a current location of the registered vessel 110, a current velocity of the registered vessel 110, a current course over ground or heading of the registered vessel 110, at least one parameter of the registered vessel 110, a current velocity of each of the plurality of registered vessels, a current course over ground or heading of each of the plurality of registered vessels, a current location of at least one unregistered vessel 111, a current velocity of the unregistered vessel 111, a classification of the unregistered vessel 111, or current weather information and/or weather forecast information. The situational data 134 may further comprise geographical information of the area where the vessels are navigating. For example, the situational data may comprise navigation chart(s) that include information on navigable channels, for example depth information.

According to an example embodiment, the at least one parameter of the registered vessel 110 may comprise at least one of: a vessel identifier, a vessel type, a vessel status, a vessel size, a vessel power, or a current vessel draught. Vessel type may comprise at least one of an autonomous vessel, a semi-autonomous vessel, a motored vessel, or an unmotored vessel. The vessel status may change depending on operation or mission of the vessel. For example, the vessel status may indicate that it is in a mission for delivering cargo or that the vessel is cruising around without a predetermined destination.

At 309, the DMSC server 130 may determine the situational awareness data 136 based on the situational data 134. The situational awareness data 136 may comprise at least an estimate of future locations of the plurality of registered vessels. The situational awareness data 136 may in general comprise predictions or estimates of any circumstances relevant for navigation of the registered vessels. Examples of situational awareness data include estimated route(s), destination(s), time(s) of arrival at the destination(s), time(s) of arrival at one or more intermediate points such as checkpoints, for the registered vessel(s). The situational awareness data 136 may further comprise estimated route(s), locations(s), and associated timing information for detected objects such as for example, unregistered vessels, floating containers or logs, or the like.

Furthermore, at 309 the DMSC server 130 may determine a virtual corridor for the at least one registered vessel 110 based on the situational awareness data 136. The virtual corridor may comprise borders of an allowed navigation route. The virtual corridor may further comprise at least one location within the allowed navigation route associated with at least one navigation parameter. The virtual corridor defines a safe navigation route for the registered vessel 110, taking into account the situational awareness data 136, for example estimated locations of other vessels or objects and/or weather forecast information.

Defining the allowed navigation route with borders provides flexibility for the registered vessel 110 to make independent navigation decisions within certain safety limits. For example, width of the allowed navigation route may be based on the type of the registered vessel 110. A wider allowed navigation route may be allocated to a semi-autonomous vessel navigating under human supervision while a narrower navigation route may be allocated to an autonomous vessel navigating without human supervision.

As discussed above, the virtual corridor may comprise at least one location within the allowed navigation route. The at least one location may be associated with at least one navigation parameter or a plurality of navigation parameters. This enables to control progress of the registered vessel 110 within the borders of the allowed navigation route. For example, if virtual corridors are determined for multiple vessels, the navigation parameter(s) associated with the locations within corresponding navigation routes may be determined such that even if the virtual corridors crossed, this would not cause the registered vessels to collide. In general, the navigation parameters define timing information with respect to location of the vessel inside the virtual corridor.

According to an example embodiment, the at least one location within the allowed navigation route may comprise at least one checkpoint or at least one geographical zone within the allowed navigation route. A checkpoint may comprise a discrete location within the virtual corridor or a line within the allowed navigation route, for example between the borders of the allowed navigation route. The at least one navigation parameter may for example comprise at least one requested entry time for the at least one checkpoint. This enables the DMSC server 130 to control progress of the registered vessel 110 within the virtual corridor. Alternatively, the at least one navigation parameter may comprise proposed or requested direction, such as for example a course over ground, and/or speed after crossing a checkpoint. The at least one navigation parameter may further comprise at least one proposed or requested velocity for the at least one geographical zone. The zone may comprise any defined area within the borders of the allowed navigation route. The at least one navigation parameter may for example comprise a proposed or requested direction, such as for example a course over ground, and/or speed after at the geographical zone. This also enables the DMSC server 130 to control progress of the registered vessel 110 within the virtual corridor. The virtual corridor may also comprise reference location information such that it can be combined with other type of map data, such as for example a navigation chart.

According to an example embodiment, the location data of the plurality of registered vessels may comprise a current location and at least one previous location for each of the plurality of registered vessels. Based on the current and previous locations the DMSC server 130 may estimate at least one future location of the registered vessels. The at least one future location may comprise a plurality of future locations for different future time instants, for example estimated locations after 10 min, 30, min and 60 min. The future locations may be associated with corresponding ranges of uncertainty depending on the reliability of the estimation. In general, predicting future locations with a longer time difference may be determined to be less reliable. This uncertainty may be taken into account when determining the virtual corridor(s).

At 310, the DMSC server 130 may transmit an indication of the virtual corridor to the registered vessel 110. The indication may comprise any suitable data for representing the virtual corridor. For example, the virtual corridor data may comprise locations of the borders, checkpoints, and/or geographical zones, which may be associated with corresponding navigation parameter(s). Alternatively, the indication may comprise a reference to a previously transmitted virtual corridor, such as for example an identifier of the virtual corridor assigned by DMSC server 130. This enables to reuse earlier virtual corridors and to avoid unnecessary data transmission. For example, vessels may often navigate the same route to the same destination with approximately same schedule. Depending on other vessels in the area, it may be possible to use the same virtual corridor again and again.

At 311, the DMSC client 112 may transmit an indication of acceptance of the virtual corridor. The DMSC client 112 may for example determine whether the virtual corridor results in a desired time of arrival at the destination and transmit the acceptance if the time of arrival is acceptable. The DMSC client 112 may alternatively, or additionally, request a user to accept the virtual corridor. The indication of the acceptance may be sent in response to receiving user acceptance. The DMSC server 130 may receive the indication of acceptance of the virtual corridor from the registered vehicle 110.

At 312, for example when the DMSC client 112 is coupled to the navigation system 114 of the registered vessel 110, the DMSC client 112 may send the virtual corridor data to the navigation system 114.

At 313 the navigation system 114 may display the virtual corridor (VC) or provide the virtual corridor data to automatic steering control (ASC) system of the navigation system 114. The automatic steering control system may comprise an autopilot or other means to automatically control navigation of the registered vessel 110. The automatic steering control system may in general be configured to control speed and direction of a vehicle and have access to various vehicle sub-systems such as for example steering, motor, and/or brake control. In general, the navigation system 114 may comprise a manual, semi-autonomous, or autonomous navigation system. In case of manual navigation system, the virtual corridor data may be combined with other navigation data such as for example radar data and displayed by the navigation system 114. Alternatively, or additionally, for example in case of a semi-autonomous or autonomous vessel, the navigation system 114 may configure or reconfigure its automatic steering control system based on the virtual corridor.

At 314, for example when the DMSC client 112 is included in a stand-alone device such as for example a mobile phone, the DMSC client 112 may cause display of the virtual corridor. This enables the user to navigate the registered vessel 110 based on the virtual corridor.

At 315, the DMSC server 130 may receive updated situational data from the plurality of data sources, for example similar to operations 306 to 308. Furthermore, the acceptance of the virtual corridor received from the DMSC client 112 may be considered as new situational data.

At 316, the DMSC server 130 may update the situational awareness data 136 based on the updated situational data 134. For example, the DMSC server 130 may monitor whether the registered vessels navigate according to the accepted virtual corridors. Furthermore, the DMSC server 130 may receive updated location information of unregistered vessels or objects from the plurality of data sources such as the sensor stations 120.

If desired, the DMSC server 130 may also update the virtual corridor determined for the registered vessel 110. For example, the DMSC server 130 may determine at least one notification associated with the virtual corridor.

At 317, the updated virtual corridor data may be transmitted to the registered vessel 110, similar to operation 310. The virtual corridor data may comprise updated virtual corridor and/or the at least one notification associated with the previously provided virtual corridor.

According to an example embodiment, the at least one notification may comprise at least one of: an estimated time of arrival at the at least one checkpoint, an update of at least one requested entry time at the at least one checkpoint, an update of at least one requested velocity at the at least one geographical zone, a warning of an unregistered vehicle or object, a warning of a second registered vehicle, a warning of an event, or weather conditions associated with at least location at the allowed navigation route, instantaneous navigation instructions associated with the virtual corridor, instantaneous navigation instructions associated with the warning(s), or an indication of an alternative virtual corridor for the registered vessel.

This enables for example to notify the captain of the registered vessel 110 of the changed virtual corridor parameters. Alternatively, notifications may serve as a trigger for reconfiguring the automatic steering control system of the navigation system 114. Furthermore, this enables warnings regarding unregistered or registered vessels, objects, or events, optionally accompanied with instantaneous navigation instructions to avoid collisions or other hazardous events. An event may comprise for example a yacht race or a regatta. An object may comprise a tangible object such as for example a container or a virtual object such as for example an indication of fishing waters. The instantaneous navigation instruction may comprise for example an instruction to slow down and/or an instruction to navigate to the right side of the virtual corridor or a channel of the navigation chart.

At 318, the registered vessel may provide acceptance of the updated virtual corridor, similar to operation 311.

Furthermore, at operations 319 to 321, the virtual corridor data may be provided to the navigation system 114, displayed or used for reconfiguring the automatic steering control system, or displayed at a stand-alone DMSC device, similar to operations 312 to 314.

At 322, the situational awareness data 136 may be updated, for example based on the virtual corridor acceptance received at 318, for example similar to operation 315.

Throughout the procedure, the DMSC client 112 may be configured to detect location (cf. operation 303) or receive location data determined by the navigation system 114 (cf. operations 301 and 302). The DMSC client 112 may transmit the location information to the DMSC server 130, for example as updates of situational data initially provided at 308.

At 322, the DMSC client 112 may receive location data from the navigation system 114, or alternative locally detect location at the DMSC client device. The DMSC client 112 may compare the location to one or more checkpoints of the virtual corridor. For example, when reaching the destination, or an exit point when leaving the virtual corridor, the DMSC client 112 may send a DMSC deregistration request to the DMSC server 112, at 323.

At 324, in response to receiving the DMSC deregistration message, the DMSC server 130 change status of the vessel to 'unregistered', and send a response to the DMSC deregistration message to confirm the deregistration to DMSC client 324. A DMSC registration request may in general comprise a registration request. A DMSC deregistration request may in general comprise a deregistration request. A DMSC (de)registration response may in general comprise a (de)registration response. The registered vessel 110 is provided as an example of a registered vehicle. A registered vehicle may comprise a ship, vessel, a truck, a car, a motorcycle, or the like.

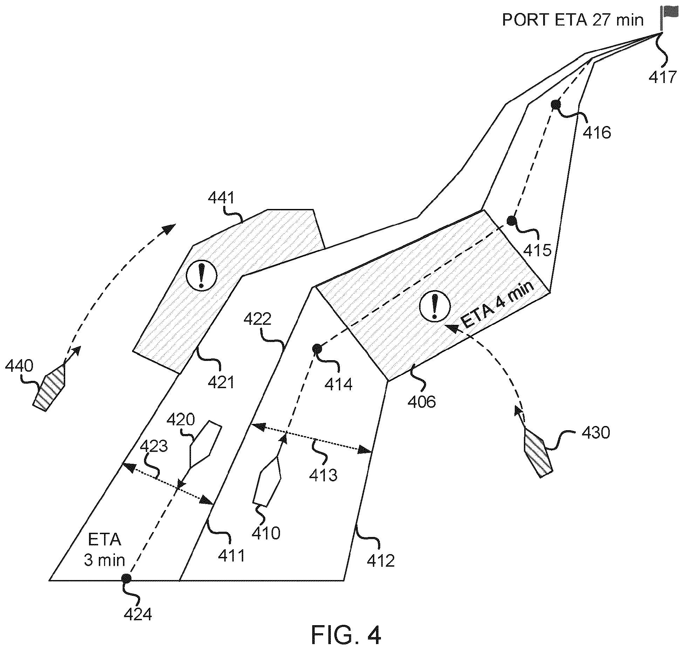

FIG. 4 illustrates an example of an application for displaying virtual corridors, according to an example embodiment. A first virtual corridor may comprise borders 411 and 412 of an allowed navigation route for a first registered vessel 410. The virtual corridor may further comprise one or a plurality of checkpoints 413, 414, 415, 416, and 417 for the first registered vessel 410. Checkpoint 413 may comprise a line within the allowed navigation route, for example between borders 411 and 412. Crossing the line may be understood as crossing or entering the checkpoint 413. Other checkpoints 414, 415, 416, and 417 may comprise distinct locations points within the allowed navigation route. The virtual corridor may further comprise a geographical zone 406.

Locations, for example the checkpoints 413 to 417 and the zone 406 may be associated with navigation parameter(s), which provides basis for navigating the registered vessel 410 at the virtual corridor. For example, at checkpoint 413 the navigation parameter(s) may comprise a requested speed, for example to instruct the registered vessel 410 to slow down to prepare for narrowing of the allowed navigation route. At checkpoint 414 the navigation parameter may comprise a requested entry time, for example in order to control how fast the registered vessel 410 approaches the destination. At zone 406 between checkpoints 414 and 415 the navigation parameter(s) may comprise a speed and a course over ground to ensure that the registered vessel 410 arrives at checkpoint 415 at a desired entry time. In general, the navigation parameter (s) may be used to guide the registered vessel 410 safely to the destination with the desired arrival time. Checkpoint 417 may comprise a destination checkpoint and it may be located at a port. The destination checkpoint may be associated with an estimated time of arrival (ETA) 27 min, which may be displayed at the virtual corridor application. Checkpoints may be also called waypoints. The virtual corridor application illustrated in FIG. 4 may reside at the DMSC client 112 or at the navigation system 114.

The virtual corridor application may further display a second virtual corridor comprising borders 421 and 422 of an allowed navigation route for a second registered vessel 420. The second virtual corridor may comprise one or a plurality of checkpoints 423, 424. Checkpoint 424 may comprise an exit point. For example, when navigating away from the port, the second registered vessel 420 may be guided via multiple checkpoints. The last checkpoint of the virtual corridor may comprise an exit checkpoint. In response to reaching the exit checkpoint 424, the registered vessel 420 may be configured to deregister from the DMSC system. Furthermore, in case of a semi-autonomous or autonomous vessel the automatic steering control system may be reconfigured to operate without the virtual corridor data.

One or more notifications may be also provided within the virtual corridor application. For example, the situational awareness data 136 may indicate that an unregistered vessel 430 is likely to enter the virtual corridor of the first registered vessel 410 at zone 406. As discussed above, the DMSC server 130 may determine to send a notification of the unregistered vessel 430 to the registered vessel 410. The notification may comprise at least one of: an indication of the affected zone 106, an estimated time of arrival of the unregistered vessel 430 at the affected zone 406, a visual warning, or an audible warning. The situational awareness data 136 maintained at the DMSC server 130 enables to provide such warnings early enough to avoid collisions. For example, after providing the notification the DMSC server 130 may update navigation parameters associated with checkpoints 413, 414 and zone 406. When the registered vessel 410 enters the affected zone 406, the DMSC server 130 may further send instantaneous navigation instructions to the registered vessel 410 to avoid collision with the unregistered vessel 430. However, even if the DMSC server did not provide instantaneous navigation instructions, the borders of the virtual corridor enable the captain of the registered vessel to safely avoid collision with the registered vessel. For example, if the registered vessel 410 stays within the borders 411 and 412, the captain of the registered vessel 410 may be confident that navigating away from the unregistered vessel 430 does not cause collision with other registered vessels or a shipwreck.

As another example, the notification may comprise a notification of a second unregistered vessel 440 that may be approaching the first border 421 of the allowed navigation route for the second registered vessel 420. For example, the DMSC server 130 may determine that the second unregistered vessel 440 is on a course that comes near the border 421. A notification may be provided accordingly. The notification may comprise an indication of an area 441 where there's a risk of colliding with the second unregistered vessel 440.

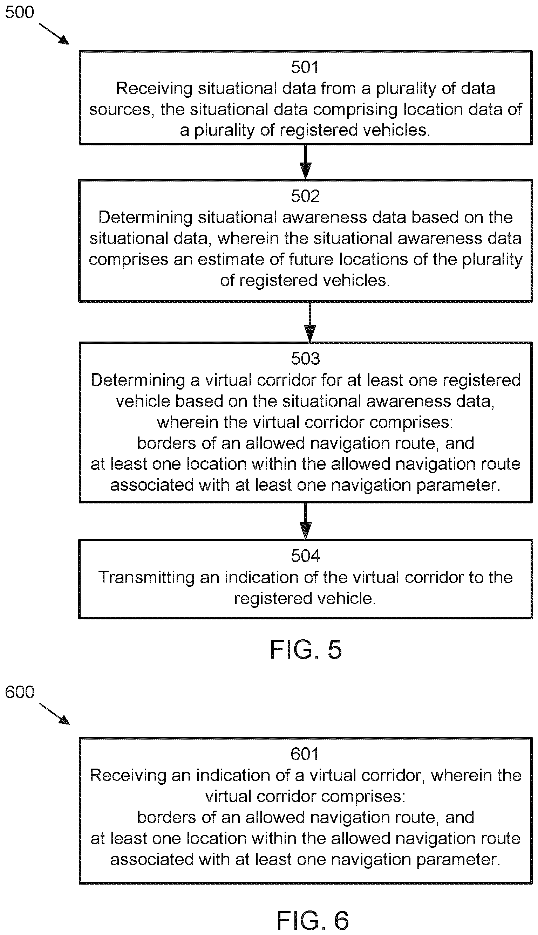

FIG. 5 illustrates an example of a method for determining a virtual corridor at a server, according to an example embodiment.

At 501, the method may comprise receiving situational data from a plurality of data sources, the situational data comprising location data of a plurality of registered vehicles.

At 502, the method may comprise situational awareness data based on the situational data, wherein the situational awareness data comprises an estimate of future locations of the plurality of registered vehicles.

At 503, the method may comprise determining a virtual corridor for at least one registered vehicle based on the situational awareness data. The virtual corridor may comprise borders of an allowed navigation route, and at least one location within the allowed navigation route associated with at least one navigation parameter.

At 504, the method may comprise transmitting an indication of the virtual corridor to the registered vehicle.

According to an example embodiment, the at least one location within the allowed navigation route may comprise at least one checkpoint or at least one geographical zone within the allowed navigation route.

According to an example embodiment, the at least one navigation parameter may comprise at least one requested entry time for the at least one checkpoint or at least one requested velocity for the at least one geographical zone.

According to an example embodiment, the location data of the plurality of registered vehicles may comprise a current location and at least one previous location for each of the plurality of registered vehicles.

According to an example embodiment, method may further comprise receiving an indication of acceptance of the virtual corridor from the registered vehicle.

According to an example embodiment, the method may further comprise receiving a registration request from at least one unregistered vehicle, and registering the at least one unregistered vehicle in response to receiving the registration request.

According to an example embodiment, the situational data may further comprise at least one of: a current location of the registered vehicle; a current velocity of the registered vehicle; a current course over ground or heading of the registered vehicle; at least one parameter of the registered vehicle; a current velocity of each of the plurality of registered vehicles; a current course over ground or heading of each of the plurality of registered vehicles; a current location of at least one unregistered vehicle; a current velocity of the unregistered vehicle; a classification of the unregistered vehicle; current weather information and/or weather forecast information associated with the at least one location.

According to an example embodiment, the at least one parameter of the registered vehicle may comprise at least one of: a vehicle identifier, a vehicle type, a vehicle status, a vehicle size, a vehicle power, or a current vehicle draught.

According to an example embodiment, the vehicle type may comprise at least one of an autonomous vehicle, a semi-autonomous vehicle, a motored vehicle, or an unmotored vehicle.

According to an example embodiment, the situational awareness data may further comprise at least one of: an estimate of future locations of the plurality of unregistered vehicles; at least one second virtual corridor determined for at least one second registered vehicle; or an indication of acceptance of the at least one second virtual corridor by the at least one second vehicle.

According to an example embodiment, the method may further comprise transmitting an indication of the at least one second virtual corridor to the registered vehicle.

According to an example embodiment, the method may further comprise receiving updated situational data from the plurality of data sources; updating the situational awareness data based on the updated situational data; determining at least one notification associated with the virtual corridor; and transmitting the at least one notification to the registered vehicle.

According to an example embodiment, the notification may comprise at least one of: an estimated time of arrival at the at least one checkpoint; an update of at least one requested entry time at the at least one checkpoint; an update of at least one requested velocity at the at least one geographical zone; a warning of an unregistered vehicle or object, a second registered vehicle, an event, or weather conditions associated with the at least location; instantaneous navigation instructions associated with the virtual corridor warning; instantaneous navigation instructions associated with the warning; or an indication of an alternative virtual corridor for the registered vessel.

According to an example embodiment, the plurality of data sources may comprise at least two of:

an automatic identification system radio receiver; an automatic identification system server; one or more remote sensor stations; the plurality of registered vehicles; a vessel traffic system.

According to an example embodiment, the registered vehicle may comprise a vessel.

FIG. 6 illustrates an example of receiving a virtual corridor at a client, according to an example embodiment.

At 601, the method may comprise receiving an indication of a virtual corridor, wherein the virtual corridor comprises: borders of an allowed navigation route, and at least one location within the allowed navigation route associated with at least one navigation parameter.

According to an example embodiment, the at least one location within the allowed navigation route may comprise at least one checkpoint or at least one geographical zone within the allowed navigation route.

According to an example embodiment, the at least one navigation parameter may comprises at least one requested entry time for the at least one checkpoint or at least one requested velocity for the at least one geographical zone.

According to an example embodiment, the indication of the virtual corridor may be received from a virtual corridor management server and the method may further comprise: transmitting a registration request to the virtual corridor management server.

According to an example embodiment, the method may further comprise transmitting an indication of acceptance of the virtual corridor to the virtual corridor management server.

According to an example embodiment, the method may further comprise causing display of the virtual corridor, or automatically navigating the registered vehicle based on the virtual corridor.

According to an example embodiment, the method may further comprise transmitting situational data associated with the registered vehicle, wherein the situational data may comprise at least one of: a current location of the registered vehicle; a current speed of the registered vehicle; a current heading and/or course over ground of the registered vehicle; at least one parameter of the registered vehicle; or current weather information.

According to an example embodiment, the at least one parameter of the registered vehicle may comprise at least one of: a vehicle identifier, a vehicle type, a vehicle status, a vehicle size, a vehicle power, or a current vehicle draught.

According to an example embodiment, the vehicle type may comprise at least one of an autonomous vehicle, a semi-autonomous vehicle, a motored vehicle, or an unmotored vehicle.

Further features of the method(s) directly result for example from functionalities of the DMSC client 112, the navigation system 114, and/or the DMSC server 130 described throughout the specification and in the appended claims. Different variations of the method(s) may be also applied, as described in connection with the various example embodiments.

An apparatus, may be configured to perform or cause performance of any aspect of the method(s) described herein. Further, a computer program may comprise instructions for causing, when executed, an apparatus to perform any aspect of the method(s) described herein. Further, an apparatus may comprise means for performing any aspect of the method(s) described herein. According to an example embodiment, the means comprises at least one processor, and memory including program code, the at least one processor, and program code configured to, when executed by the at least one processor, cause performance of any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first' or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus, comprising:
means for receiving situational data from a plurality of data sources, the situational data comprising location data of a plurality of registered vehicles;
means for determining situational awareness data based on the situational data, wherein the situational awareness data comprises an estimate of future locations of the plurality of registered vehicles;
means for determining a virtual corridor for at least one registered vehicle based on the situational awareness data, wherein the virtual corridor comprises:
borders of an allowed navigation route, and
at least one location within the allowed navigation route associated with at least one navigation parameter; and
means for transmitting an indication of the virtual corridor to the registered vehicle.

2. The apparatus according to claim 1, wherein the at least one location within the allowed navigation route comprises at least one checkpoint or at least one geographical zone within the allowed navigation route.

3. The apparatus according to claim 2, wherein the at least one navigation parameter comprises at least one requested entry time for the at least one checkpoint or at least one requested velocity for the at least one geographical zone.

4. The apparatus according to any preceding claim, further comprising:
means for receiving an indication of acceptance of the virtual corridor from the registered vehicle.

5. The apparatus according to any preceding claim, wherein the situational data further comprises at least one of:
a current location of the registered vehicle;
a current velocity of the registered vehicle;
a current course over ground or heading of the registered vehicle;
at least one parameter of the registered vehicle;
a current velocity of each of the plurality of registered vehicles;
a current course over ground or heading of each of the plurality of registered vehicles;
a current location of at least one unregistered vehicle;
a current velocity of the unregistered vehicle;
a classification of the unregistered vehicle; or
current weather information and/or weather forecast information associated with the at least one location.

6. The apparatus according to any preceding claim, wherein the situational awareness data further comprises at least one of:
an estimate of future locations of the plurality of unregistered vehicles;
at least one second virtual corridor determined for at least one second registered vehicle; or
an indication of acceptance of the at least one second virtual corridor by the at least one second vehicle.

7. The apparatus according to any preceding claim, further comprising:
means for receiving updated situational data from the plurality of data sources;
means for updating the situational awareness data based on the updated situational data;
means for determining at least one notification associated with the virtual corridor; and
means for transmitting the at least one notification to the registered vehicle.

8. An apparatus, comprising:
means for receiving an indication of a virtual corridor, wherein the virtual corridor comprises:
borders of an allowed navigation route, and
at least one location within the allowed navigation route associated with at least one navigation parameter.

9. The apparatus according to claim 8, wherein the at least one location within the allowed navigation route comprises at least one checkpoint or at least one geographical zone within the allowed navigation route.

10. The apparatus according to claim 9, wherein the at least one navigation parameter comprises at least one requested entry time for the at least one checkpoint or at least one requested velocity for the at least one geographical zone.

11. The apparatus according to any of claims 8 to 10, further comprising:
means for causing display of the virtual corridor, or
means for automatically navigating the registered vehicle based on the virtual corridor.

12. A method comprising:
receiving situational data from a plurality of data sources, the situational data comprising location data of a plurality of registered vehicles;
determining situational awareness data based on the situational data, wherein the situational awareness data comprises an estimate of future locations of the plurality of registered vehicles;
determining a virtual corridor for at least one registered vehicle based on the situational awareness data, wherein the virtual corridor comprises:
borders of an allowed navigation route, and
at least one location within the allowed navigation route associated with at least one navigation parameter; and
transmitting an indication of the virtual corridor to the registered vehicle.

13. A method comprising:
receiving an indication of a virtual corridor, wherein the virtual corridor comprises:
borders of an allowed navigation route, and
at least one location within the allowed navigation route associated with at least one navigation parameter.

14. A computer program comprising program code configured to cause an apparatus at least to:
receive situational data from a plurality of data sources, the situational data comprising location data of a plurality of registered vehicles;
determine situational awareness data based on the situational data, wherein the situational awareness data comprises an estimate of future locations of the plurality of registered vehicles;
determine a virtual corridor for at least one registered vehicle based on the situational awareness data, wherein the virtual corridor comprises:
borders of an allowed navigation route, and
at least one location within the allowed navigation route associated with at least one navigation parameter; and
transmit an indication of the virtual corridor to the registered vehicle.

15. A computer program comprising program code configured to cause an apparatus at least to:
receive an indication of a virtual corridor, wherein the virtual corridor comprises:
borders of an allowed navigation route, and
at least one location within the allowed navigation route associated with at least one navigation parameter.

## Amended claims

### Amended claims in accordance with Rule 137(2) EPC.

1. An apparatus for maritime navigation, comprising:
means for receiving situational data from a plurality of data sources, the situational data comprising location data of a plurality of registered vehicles;
means for determining situational awareness data based on the situational data, wherein the situational awareness data comprises an estimate of future locations of the plurality of registered vehicles;
means for determining a virtual corridor for at least one registered vehicle based on the situational awareness data, wherein the virtual corridor comprises:
borders of an allowed navigation route, and
at least one location within the allowed navigation route associated with at least one navigation parameter; and
means for transmitting an indication of the virtual corridor to the registered vehicle.

2. The apparatus according to claim 1, wherein the at least one location within the allowed navigation route comprises at least one checkpoint or at least one geographical zone within the allowed navigation route.

3. The apparatus according to claim 2, wherein the at least one navigation parameter comprises at least one requested entry time for the at least one checkpoint or at least one requested velocity for the at least one geographical zone.

4. The apparatus according to any preceding claim, further comprising:
means for receiving an indication of acceptance of the virtual corridor from the registered vehicle.

5. The apparatus according to any preceding claim, wherein the situational data further comprises at least one of:
a current location of the registered vehicle;
a current velocity of the registered vehicle;
a current course over ground or heading of the registered vehicle;
at least one parameter of the registered vehicle;
a current velocity of each of the plurality of registered vehicles;
a current course over ground or heading of each of the plurality of registered vehicles;
a current location of at least one unregistered vehicle;
a current velocity of the unregistered vehicle;
a classification of the unregistered vehicle; or
current weather information and/or weather forecast information associated with the at least one location.

6. The apparatus according to any preceding claim, wherein the situational awareness data further comprises at least one of:
an estimate of future locations of the plurality of unregistered vehicles;
at least one second virtual corridor determined for at least one second registered vehicle; or
an indication of acceptance of the at least one second virtual corridor by the at least one second vehicle.

7. The apparatus according to any preceding claim, further comprising:
means for receiving updated situational data from the plurality of data sources;
means for updating the situational awareness data based on the updated situational data;
means for determining at least one notification associated with the virtual corridor; and
means for transmitting the at least one notification to the registered vehicle.

8. An apparatus for maritime navigation, comprising:
means for receiving an indication of a virtual corridor over a wireless radio connection, wherein the virtual corridor comprises:
borders of an allowed navigation route, and
at least one location within the allowed navigation route associated with at least one navigation parameter.

9. The apparatus according to claim 8, wherein the at least one location within the allowed navigation route comprises at least one checkpoint or at least one geographical zone within the allowed navigation route.

10. The apparatus according to claim 9, wherein the at least one navigation parameter comprises at least one requested entry time for the at least one checkpoint or at least one requested velocity for the at least one geographical zone.

11. The apparatus according to any of claims 8 to 10, further comprising:
means for causing display of the virtual corridor, or
means for automatically navigating the registered vehicle based on the virtual corridor.

12. A method for maritime navigation, comprising:
receiving situational data from a plurality of data sources, the situational data comprising location data of a plurality of registered vehicles;
determining situational awareness data based on the situational data, wherein the situational awareness data comprises an estimate of future locations of the plurality of registered vehicles;
determining a virtual corridor for at least one registered vehicle based on the situational awareness data, wherein the virtual corridor comprises:
borders of an allowed navigation route, and
at least one location within the allowed navigation route associated with at least one navigation parameter; and
transmitting an indication of the virtual corridor to the registered vehicle.

13. A method for maritime navigation, comprising:
receiving an indication of a virtual corridor over a wireless radio connection, wherein the virtual corridor comprises:
borders of an allowed navigation route, and
at least one location within the allowed navigation route associated with at least one navigation parameter.

14. A computer program comprising program code configured to cause an apparatus for maritime navigation at least to:
receive situational data from a plurality of data sources, the situational data comprising location data of a plurality of registered vehicles;
determine situational awareness data based on the situational data, wherein the situational awareness data comprises an estimate of future locations of the plurality of registered vehicles;
determine a virtual corridor for at least one registered vehicle based on the situational awareness data, wherein the virtual corridor comprises:
borders of an allowed navigation route, and
at least one location within the allowed navigation route associated with at least one navigation parameter; and
transmit an indication of the virtual corridor to the registered vehicle.

15. A computer program comprising program code configured to cause an apparatus for maritime navigation at least to:
receive an indication of a virtual corridor over a wireless radio connection, wherein the virtual corridor comprises:
borders of an allowed navigation route, and
at least one location within the allowed navigation route associated with at least one navigation parameter.
